# EUROPÄISCHE PATENTSCHRIFT

(11) **EP 1 933 255 B1**
(45) Veröffentlichungstag und Bekanntmachung des Hinweises auf die Patenterteilung: **06.06.2012**
(21) Anmeldenummer: 07022843.2
(22) Anmeldetag: 26.11.2007
(51) Int. Cl.: G06K 9/00, B60R 1/08

(54) **Verfahren und System zum erkennen eines Verkehrsteilnehmers und zum Erzeugen einer Warnung**
Method and system for recognising someone taking part in traffic and for generating an alarm
Procédé et système destinés à la reconnaissance d'un utilisateur d'un réseau routier et à la production d'une alerte

(30) Priorität: 14.12.2006 DE 102006059033
(43) Veröffentlichungstag der Anmeldung: 18.06.2008
(73) Patentinhaber: Volkswagen Aktiengesellschaft, 38436 Wolfsburg (DE)
(72) Erfinder: Meinecke, Marc-Michael, Dr., 38524 Sassenburg (DE); Graf, Thorsten, Dr., 38518 Gifhorn (DE); Kirchner, Alexander, Dr., 38104 Braunschweig (DE); Broggi, Alberto, Prof. Dr., 43100 Parma (IT); Fascioli, Alessandra, Dr., 20129 Milano (IT); Cerri, Pietro, 26866 S. Angelo Lodigiano (IT); Ghidoni, Stefano, 43100 Parma (IT); Grisleri, Paolo, 29010 Roveleto di Cadeo (IT)

(56) Entgegenhaltungen:
- US-A1- 2006 261 931
- LETELLIER ET AL: "Deliverable 8: Sensor Systems Architecture" INTERNET CITATION, [Online] Seite 19, XP002412654 Gefunden im Internet: URL:http://www.save-u.org/download/PDF/D8_ v2.0.pdf> [gefunden am 2006-12-21]
- BERTOZZI ET AL: "Low-level Pedestrian Detection by means of Visible and Far Infra-red Tetra-vision" INTELLIGENT VEHICLES SYMPOSIUM, 2006 IEEE MEGURO-KU, JAPAN 13-15 JUNE 2006, PISCATAWAY, NJ, USA,IEEE, 1. Januar 2006 (2006-01-01), Seiten 231-236, XP031001339 ISBN: 978-4-901122-86-3

## Beschreibung

Die vorliegende Erfindung betrifft ein Verfahren zum Erkennen eines Verkehrsteilnehmers und zum Erzeugen einer Warnung. Ferner betrifft die Erfindung ein Erkennungs- und Warnsystem mit einer ersten Kamera zur Aufnahme eines Bildes im sichtbaren Spektralbereich und einer zweiten Kamera zur Aufnahme eines Bildes im nicht sichtbaren Spektralbereich. Das Verfahren sowie das Erkennungs- und Warnsystem können insbesondere in einem Fortbewegungsmittel, wie z. B. einem Kraftfahrzeug, eingesetzt werden und hier Fahrerassistenzsysteme ergänzen.

Um Unfälle zwischen Kraftfahrzeugen und anderen Verkehrsteilnehmern, insbesondere solchen, die keine eigene Beleuchtung aufweisen, zu vermeiden, sind Systeme bekannt, die ein Wärmebild des Bereichs vor dem Fahrzeug aufnehmen und es dem Fahrer darstellen. Auf diese Weise kann der Fahrer, insbesondere bei Dunkelheit, besser unbeleuchtete Verkehrsteilnehmer, wie z. B. Fußgänger und ggf. auch Radfahrer, frühzeitig erkennen. Ferner sind Kamerasysteme bekannt, welche unterschiedliche Bildelemente klassifizieren und dem Fahrer eine Warnung ausgeben, wenn bestimmte Objekte bei bestimmten Positionen erkannt werden.

Die EP 1 437 615 A1 bezieht sich auf ein Infrarot-Nachtsichtsystem für Kraftfahrzeuge. Dabei wird ein erstes Bild ohne Belichtung mit aktiver IR-Beleuchtung und zusätzlich ein zweites Bild unter Belichtung mit aktiver IR-Beleuchtung aufgenommen. Dabei werden relevante Objekte vor dem Fahrzeug, die der Fahrer nur mit einem Nachtsichtsystem wahrnehmen kann, durch Verknüpfung der Bildinformation der beiden Bilder herausgefiltert.

Die DE 103 55 104 A1 betrifft eine Anzeigevorrichtung zur Unterstützung eines Kraftfahrzeugführers während einer Nachtfahrt oder bei schlechter Sicht. Dabei wird ein Bild der Umgebung mittels einer Tageslicht-Kamera und mittels einer Infrarot-Kamera erfasst und relevante Unterschiede dieser Bilder dem Kraftfahrzeugführers kenntlich gemacht.

Die nachveröffentlichte JP 2006-338594 A beschreibt eine Fußgänger-Erfassungsvorrichtung mit einer normalen Kamera, mit einer Infrarot-Kamera und mit einem Entfernungssensor.

In "Pedestrian Detection on a Moving Vehicle: an Investigation about Near Infra-Red Images", A. Broggi, T. Graf, M. Meinecke u.a., Intelligent Vehicles Symposium 2006, 13.-15. Juni 2006, Japan, (XP010937052) wird ein System beschrieben, mit welchem man in einem Infrarotbild einen Fußgänger erkennen kann.

"Deliverable 8: Sensor Systems Architecture", L. Letellier u.a., SAVE-U, XP002412654 beschreibt die Zusammenfassung von Daten, welche mit verschiedenen Sensoren erfasst werden. Dabei werden beispielsweise Infrarotbilder eingesetzt, um ein Bildbearbeitungssystem anzusteuern.

Aus der DE 10 2004 028 324 A1 ist beispielsweise ein Wärmebilderkennungssystem bekannt, welches eine Wärmebildkamera und Bildverarbeitungsmittel aufweist, wobei die Bildverarbeitungseinheit so ausgestaltet ist, dass sie unter Anwendung mindestens eines Lebewesen-Modells durch Auswertung des Wärmebilds automatisch ein Lebewesen in dem Wärmebild erkennen kann. Wird Lebewesen erkannt, kann der Fahrer beispielsweise durch ein Blinklicht darauf aufmerksam gemacht werden.

Des Weiteren ist aus der DE 10 2004 012 811 A1 eine Vorrichtung zum Überwachen der Umgebung eines Fahrzeugs bekannt, bei der durch Analyse des Bildes einer Infrarotkamera auf einen Fußgänger geschlossen wird.

Nachteilhaft an bekannten Verfahren zum Erkennen eines Verkehrsteilnehmers und Erkennungs- und Warnsystemen ist, dass häufig fehlerhafte Warnmeldungen ausgegeben werden, d.h. es wird eine Warnung ausgegeben, obwohl die tatsächliche Situation keine Warnung erforderlich macht.

Es ist daher die Aufgabe der vorliegenden Erfindung, eine Verfahren und ein System der eingangs genannten Art bereitzustellen, mit denen die Zahl fehlerhafter Warnmeldungen beim Erkennen eines Verkehrsteilnehmers verringert werden kann.

Erfindungsgemäß wird diese Aufgabe durch ein Verfahren mit den Merkmalen des Anspruchs 1 und einem Erkennungs- und Warnsystem mit den Merkmalen des Anspruchs 4 gelöst. Vorteilhafte Aus- und Weiterbildungen ergeben sich aus den Unteransprüchen.

Bei dem erfindungsgemäßen Verfahren werden ein Bild im sichtbaren Spektralbereich und ein Bild im nicht sichtbaren Spektralbereich aufgenommen, die aufgenommenen Bilder werden auf Verkehrsteilnehmer untersucht und es wird nur dann eine Warnung ausgegeben, wenn im Bild des nicht sichtbaren Spektralbereichs ein Verkehrsteilnehmer erkannt wird und im Bild des sichtbaren Spektralbereichs dieser Verkehrsteilnehmer nicht erkannt wird.

Unter einem Verkehrsteilnehmer wird im Sinne der Erfindung jedes Lebewesen verstanden, das sich in einem Verkehrsbereich aufhält. Bei einem Einsatz des Verfahrens in einem Kraftfahrzeug handelt es sich in diesem Fall insbesondere um unbeleuchtete Verkehrsteilnehmer, wie z. B. Fußgänger und ggf. Fahrradfahrer sowie Tiere.

Unter einem Bild im sichtbaren Spektralbereich wird eine Abbildung und Aufnahme der elektromagnetischen Strahlung verstanden, die für das menschliche Auge sichtbar ist. Unter einem Bild im nicht sichtbaren Spektralbereich wird eine Abbildung und Aufnahme von elektromagnetischer Strahlung verstanden, die für das menschliche Auge im Wesentlichen nicht sichtbar ist.

Bei der Untersuchung, ob in den Bildern ein Verkehrsteilnehmer erkannt werden kann, wird zunächst das Bild im nicht sichtbaren Spektralbereich untersucht. Wenn in diesem Bild kein Verkehrsteilnehmer erkannt wird, wird die Untersuchung beendet. Wenn in dem Bild des nicht sichtbaren Spektrums in einem bestimmten Bereich ein Verkehrsteilnehmer erkannt wird, wird das Bild im sichtbaren Spektrum in diesem Bereich untersucht. Hierbei wird vorzugsweise jedoch zunächst keine vollständige Bildanalyse durchgeführt, sondern zunächst nur geprüft, ob in dem Bild eine Struktur vorhanden ist, die prinzipiell einem Verkehrsteilnehmer zugeordnet werden kann. Ist dies nicht der Fall, kann bereits zu diesem Zeitpunkt als Ergebnis ausgegeben werden, dass kein Verkehrsteilnehmer im Bild des sichtbaren Spektrums erkannt worden ist und die entsprechende Warnung ausgegeben werden. Wenn andererseits im Bild des sichtbaren Spektrums in dem Bereich, in dem im Bild des nicht sichtbaren Spektrums ein Verkehrsteilnehmer erkannt worden ist, eine Struktur vorhanden ist, die prinzipiell einem Verkehrsteilnehmer zugeordnet werden könnte, wird eine weitere Bildanalyse dieses Bereichs durchgeführt, bei der zwischen einem Verkehrsteilnehmer und einem anderen Objekt, wie z. B. einem Baum oder einem Strauch, unterschieden werden kann. Diese Bildanalyse ist bei einem Bild im sichtbaren Spektrum jedoch relativ aufwändig. Diese aufwändige Bildanalyse muss bei dem erfindungsgemäßen Verfahren somit nur dann durchgeführt werden, wenn im Bild des sichtbaren Spektrums eine Struktur vorhanden ist, die in einem Bereich auftritt, in dem im Bild des nicht sichtbaren Spektrums ein Verkehrsteilnehmer erkannt wurde und die prinzipiell einem Verkehrsteilnehmer zugeordnet werden kann.

Durch das erfindungsgemäße Verfahren kann die Häufigkeit fehlerhafter Warnungen signifikant reduziert werden. Eine Vielzahl von fehlerhaften Warnmeldungen bei bekannten Verfahren ergibt sich aus einer Fehlinterpretation eines Bildes im nicht sichtbaren Spektralbereich, insbesondere eines Wärmebildes. Eine Warnung ist für den Fahrer jedoch nur dann erforderlich, wenn er selbst den Verkehrsteilnehmer, z. B. wegen Dunkelheit, nicht erkennen kann. Nur in diesem Fall ist er auf eine Warnung angewiesen. Bei dem erfindungsgemäßen Verfahren werden keine Warnungen erzeugt, wenn der Verkehrsteilnehmer auch für den Fahrer sichtbar ist, da in diesem Fall sowohl das Bild im sichtbaren Spektralbereich als auch das Bild im nicht sichtbaren Spektralbereich eine Abbildung des Verkehrsteilnehmers enthält. Eine Warnung erfolgt nur dann, wenn der Verkehrsteilnehmer im Bild des sichtbaren Spektralbereichs nicht erkannt wird.

Bei dem Bild im nicht sichtbaren Spektralbereich kann es sich insbesondere um ein Wärmebild handeln, das z. B. mittels einer Infrarotkamera, insbesondere einer Fern-Infrarot-Kamera, aufgenommen wird.

Gemäß dem erfindungsgemäßen Verfahren wird ein Fußgänger erkannt, indem die Beinbewegung des Fußgängers untersucht wird und nur dann eine Warnung ausgegeben wird, wenn die Beinbewegung eine Querbewegung zeigt. Die Querbewegung des Fußgängers wird an der offenen Beinsteliung des Fußgängers erkannt. Die Querrichtung bezieht sich auf die Bewegungsrichtung eines Verkehrsmittels, in dem das erfindungsgemäße Verfahren eingesetzt wird. Durch diese Weiterbildung kann die Fehlerhäufigkeit der Warnungen beim Erkennen von Fußgängern weiter reduziert werden, da Fußgänger, die sich z. B. auf einem Bürgersteig in Richtung des Verkehrsmittels oder in entgegengesetzter Richtung bewegen, nicht zu einer Warnung führen. Die aufwändige Analyse der Beinbewegung des Fußgängers wird bei dem erfindungsgemäßen Verfahren bevorzugt nur im Bild des nicht sichtbaren Spektrums durchgeführt.

Das erfindungsgemäße Erkennungs- und Warnsystem umfasst eine Auswerteeinheit, der die von den Kameras aufgenommenen Bilder zuführbar sind, wobei mit der Auswerteeinheit die Bilder der Kameras auf Verkehrsteilnehmer untersuchbar sind und wobei die Auswerteeinheit so ausgebildet ist, dass nur dann eine Warnung ausgegeben wird, wenn im Bild des nicht sichtbaren Spektralbereichs ein Verkehrsteilnehmer erkannt wird und im Bild des sichtbaren Spektralbereichs dieser Verkehrsteilnehmer nicht erkannt wird. Wie vorstehend beschrieben, untersucht die Auswerteeinheit zunächst das Bild des nicht sichtbaren Spektralbereichs. Wird in diesem Bild ein Verkehrsteilnehmer erkannt, untersucht die Auswerteeinheit im Bild des sichtbaren Spektralbereichs, ob in diesem Bereich eine Struktur vorhanden ist, die prinzipiell einem Verkehrsteilnehmer zugeordnet werden kann. Nur falls dies der Fall ist, wird eine weitergehende Analyse durchgeführt, ob diese Struktur tatsächlich einem Verkehrsteilnehmer zugeordnet werden kann.

Bei der ersten Kamera handelt es sich insbesondere um eine Wärmebildkamera, bevorzugt um eine Fern-Infrarot-Kamera. Sie nimmt elektromagnetische Strahlung im Fern-Infrarot-Spektralbereich (FIR) auf. Vorteilhaft an der Verwendung der Fern-Infrarot-Technologie ist, dass Verkehrsteilnehmer in großer Entfernung nachgewiesen werden können.

Mit der Auswerteeinheit ist ferner die Beinbewegung eines Fußgängers untersuchbar, wobei nur dann eine Warnung ausgegeben wird, wenn die Beinbewegung eine Querbewegung zeigt, die an einer offenen Beinstellung des Fußgängers erkennbar ist.

Die Erfindung betrifft ferner ein Fahrerassistenzsystem für ein Kraftfahrzeug mit dem vorstehend beschriebenen Erkennungs- und Warnsystem.

Die Erfindung wird nun anhand eines Ausführungsbeispiels mit Bezug zu den Zeichnungen erläutert.

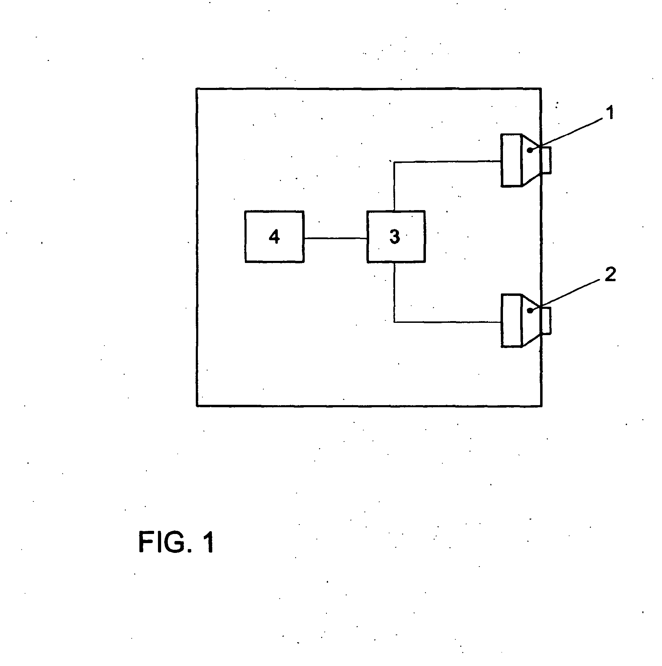

- Fig. 1: zeigt schematisch den Aufbau eines Ausführungsbeispiels des erfindungsgemäßen Erkennungs- und Warnsystems,
- die Fig. 2A und B: zeigen Bilder einer Kamera für den Fern-Infrarot-Spektralbereich und einer Kamera für den sichtbaren Spektralbereich,
- die Fig. 3A und B: zeigen die Bilder der beiden Kameras in einer Situation, bei welcher keine Warnung ausgegeben wird,
- die Fig. 4A und B: zeigen die Bilder der Kameras für eine Situation, bei der eine Warnung ausgegeben wird,
- die Fig. 5: zeigt das Bild eines Fußgängers, der eine Querbewegung ausführt, das mit der Fern-Infrarot-Kamera aufgenommen wurde,
- Fig. 6: zeigt das Bild eines Fußgängers, der eine Bewegung in Fahrtrichtung ausführt, das mit der Fern-Infrarot-Kamera aufgenommen wurde, und

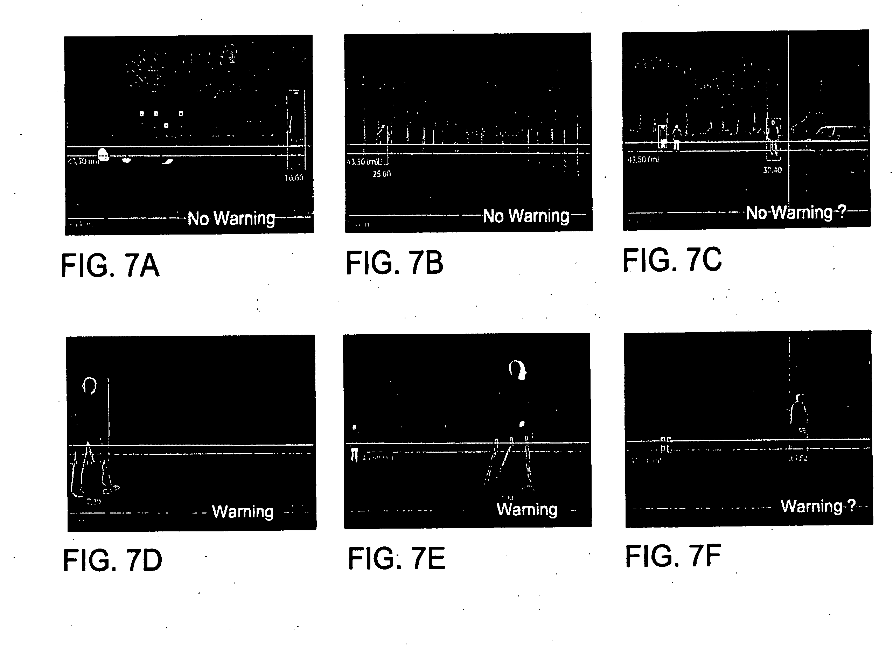

- die Fig. 7A bis 7F: zeigen verschiedene, mit der Fern-Infrarot-Kamera aufgenommene Situationen.

Das Erkennungs- und Warnsystem ist Teil eines Fahrerassistenzsystems eines Kraftfahrzeugs. Auf gleiche Weise könnte es jedoch auch bei anderen Verkehrsmitteln eingesetzt werden. Mit dem System sollen insbesondere Fußgänger erkannt werden und dem Fahrer des Kraftfahrzeugs eine Warnung gegeben werden, wenn er selbst den Fußgänger, z. B. aufgrund von Dunkelheit, nicht erkennen kann.

Das System umfasst zwei Kameras 1 und 2. Die Kameras 1 und 2 sind so im Fahrzeug befestigt, dass Bilder des Bereichs vor dem Kraftfahrzeug erfasst werden können. Der Öffnungswinkel des erfassten Bereichs entspricht z. B. demjenigen, der bei bekannten Kamerasystemen in Fahrerassistenzsystemen für Kraftfahrzeuge eingesetzt wird. Mit der ersten Kamera wird ein Bild im sichtbaren Spektralbereich aufgenommen. Es kann sich beispielsweise um eine herkömmliche CCD-Kamera handeln. Das Bild dieser Kamera gibt die Situation vor dem Kraftfahrzeug wieder, wie sie vom Fahrer wahrgenommen wird.

Mit der zweiten Kamera wird ein Bild im nicht sichtbaren Spektralbereich aufgenommen. Diese Kamera ist insbesondere eine Wärmebildkamera, welche elektromagnetische Strahlung im fernen Infrarot-Bereich detektiert. Durch das Bild dieser Kamera können auch Objekte, insbesondere Lebewesen, die Infrarot-Strahlung abgeben, nachgewiesen werden. Es können so z. B. auch Fußgänger erkannt werden, die von dem Fahrer aufgrund von Dunkelheit nicht wahrgenommen werden können.

Die Kameras 1 und 2 nehmen fortlaufend Bilder desselben Bereichs auf und übertragen sie an eine Auswerteeinheit 3. Die Auswerteeinheit 3 umfasst Bildverarbeitungsmittel, mit denen die Bilder der beiden Kameras 1 und 2 auf Verkehrsteilnehmer untersucht werden können. Durch die Bildverarbeitungsmittel können insbesondere Fußgänger auf den Bildern der Kameras 1 und 2 erkannt werden. Falls die Auswerteeinheit 3 im Bild der zweiten Kamera 2 für den nicht sichtbaren Spektralbereich einen Verkehrsteilnehmer, insbesondere einen Fußgänger, erkennt, prüft die Auswerteeinheit 3, ob dieser Verkehrsteilnehmer auch im Bild der ernsten Kamera 1 für den sichtbaren Spektralbereich erkannt werden kann. Hierbei prüft die Auswerteeinheit 3 zunächst in dem Bereich des Bildes der ersten Kamera 1, in dem im Bild der zweiten Kamera 2 der Verkehrsteilnehmer erkannt worden ist, ob eine Struktur vorhanden ist, die prinzipiell einem Verkehrsteilnehmer zugeordnet werden kann. Falls eine solche Struktur nicht vorhanden ist, d. h. z. B. wenn die Kontraste nicht ausreichen, um überhaupt einen Verkehrsteilnehmer erkennen zu können, wird die Untersuchung des Bildes der ersten Kamera 1 abgebrochen, woraufhin die Auswerteeinheit 3 ein Steuersignal an einer Einrichtung 4 zum Ausgeben einer Warnung überträgt. Falls die ermittelte Struktur in dem Bild der ersten Kamera 1 prinzipiell auf einen Verkehrsteilnehmer hinweisen könnte, wird diese Struktur von der Auswerteeinheit 3 weiter untersucht. Bei dieser weitergehenden Prüfung kann unterschieden werden, ob die Struktur zu einem Verkehrsteilnehmer gehört oder zu einem anderen Objekt, wie z. B. einer Pflanze. Nur wenn nach dieser weitergehenden Untersuchung feststeht, dass im Bild der ersten Kamera 1 in dem entsprechenden Bereich, kein Verkehrsteilnehmer erkannt wird, überträgt die Auswerteeinheit 3 das Steuersignal an die Einrichtung 4 zum Ausgeben einer Warnung. Dieses Steuersignal wird somit nur dann erzeugt, wenn der Fahrer, der nur den sichtbaren Spektralbereich wahrnimmt, den Verkehrsteilnehmer nicht erkennen kann, das Bild der Kamera für den nicht sichtbaren Spektralbereich jedoch anzeigt, dass sich ein Verkehrsteilnehmer vor dem Kraftfahrzeug befindet. Die Einrichtung 4 gibt dann eine akustische und/oder optische Warnung an den Fahrer aus. Ferner können z. B. das Fernlicht oder Zusatzscheinwerfer des Fahrzeugs eingeschaltet werden.

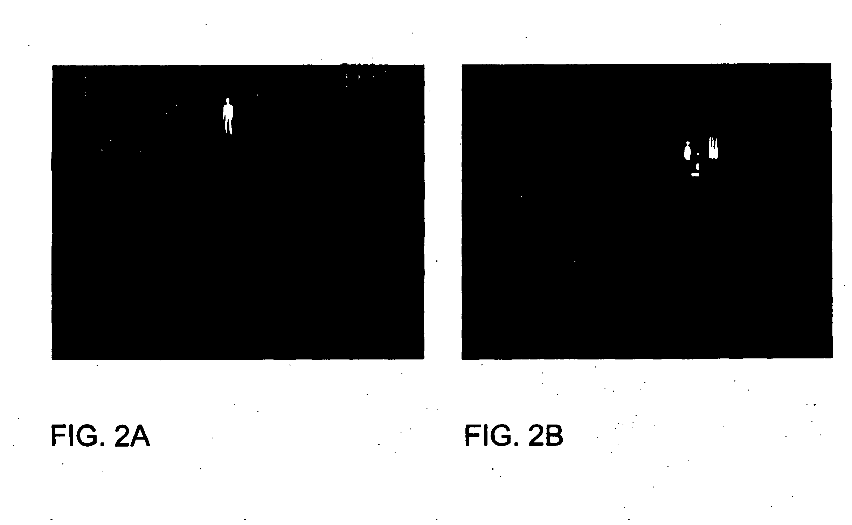

In der Fig. 2A ist ein Beispiel eines Bildes des Verkehrsbereichs vor einem Kraftfahrzeug gezeigt, welches von einer Fern-Infrarot-Kamera 2 aufgenommen wurde, in Fig. 2B ist ein Bild desselben Verkehrsbereichs gezeigt, das mit einer Kamera 1 für den sichtbaren Spektralbereich aufgenommen wurde.

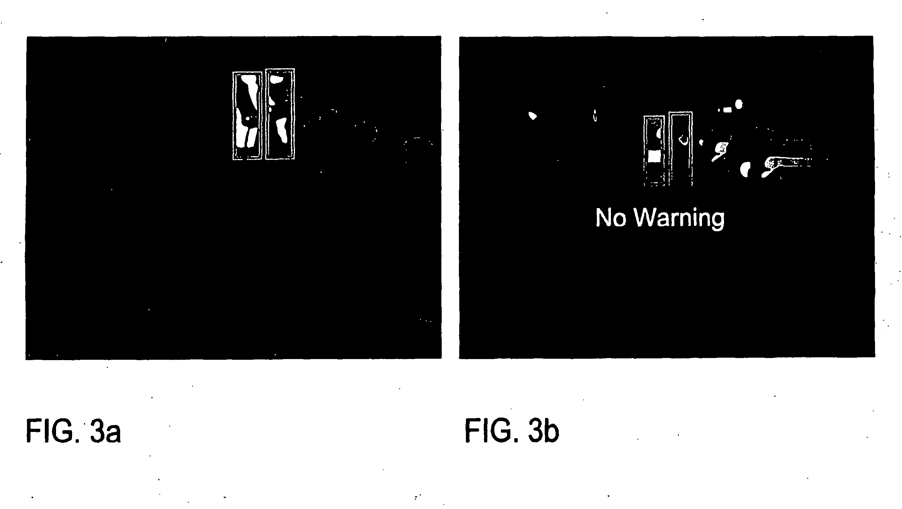

Ein weiteres Beispiel ist in den Fig. 3A und 3B gezeigt. Die umrandeten Bereiche zeigen Teile des Bildes an, in dem die Auswerteeinheit 3 Fußgänger erkannt hat. Da die beiden Fußgänger sowohl in dem in Fig. 3A gezeigten Bild der Fern-Infrarot-Kamera 2 erkennbar sind, als auch in dem in Fig. 3B gezeigten Bild der Kamera 1 für den sichtbaren Spektralbereich, wird keine Warnung ausgegeben.

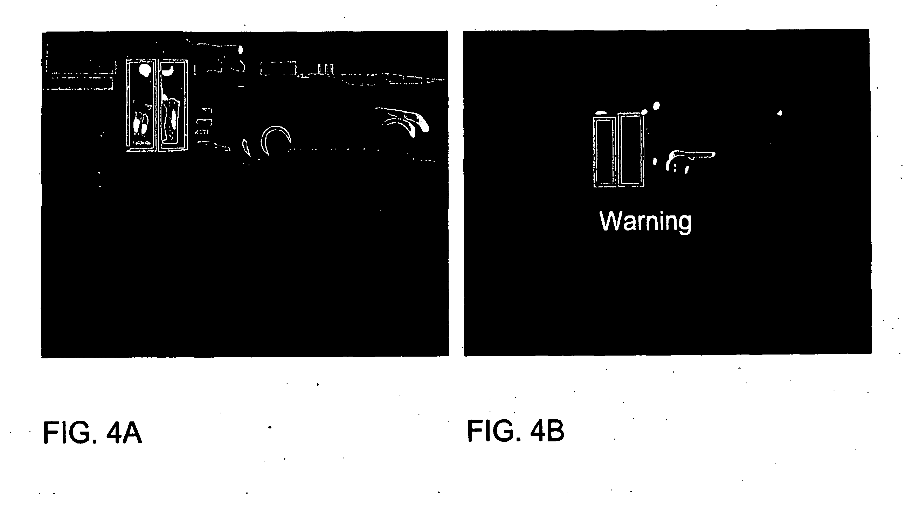

Bei dem in den Fig. 4A und 4B gezeigten Beispiel, sind die beiden Fußgänger nur noch in dem Bild der Fern-Infrarot-Kamera 2 erkennbar und nicht mehr in dem entsprechenden Bild der Kamera 1 für den sichtbaren Spektralbereich. In diesem Fall wird somit eine Warnung ausgegeben.

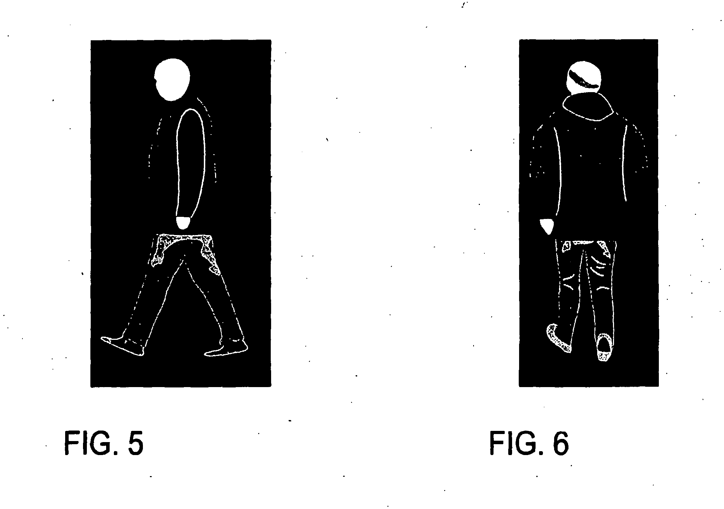

Falls von der Auswerteeinheit 3 ein Fußgänger, z. B. anhand des Umrisses erkannt wird, kann eine weitere Auswertung der Bewegung des Fußgängers erfolgen. Hierfür wird die Beinbewegung des Fußgängers anhand aufeinanderfolgender Bilder der Kamera 2 für den nicht sichtbaren Spektralbereich untersucht. In Fig. 5 ist das Bild der Fern-Infrarot-Kamera 2 gezeigt, welches einen Fußgänger aufgenommen hat, der sich quer zur Fahrtrichtung des Fahrzeugs bewegt. In Fig. 6 ist ein entsprechendes Bild der Fern-Infrarot-Kamera 2 gezeigt, welches einen Fußgänger aufgenommen hat, der sich in Fahrtrichtung bewegt. Als Entscheidungskriterium, ob sich der Fußgänger quer zum Fahrzeug oder längs zum Fahrzeug bewegt, wird die gut erkennbare Beinstellung genutzt. Wird die in Fig. 5 gezeigte offene Beinstellung nachgewiesen, wird eine Warnung ausgegeben, wird wie in Fig. 6 gezeigt, diese offene Beinstellung nicht nachgewiesen wird, keine Warnung ausgegeben. Die Verwendung der Beinstellung des Fußgängers als Entscheidungskriterium für die Bewegung des Fußgängers hat den Vorteil, dass es nicht erforderlich ist, die Trajektorien der Fußgängerbewegung zu ermitteln. Solche Trajektorien lassen sich mit einer Einzelkamera sehr schwer zuverlässig bestimmen, so dass die bestimmte Trajektorie als Auswertekriterium ungeeignet ist.

### Bezugszeichenliste

- 1: Kamera für den sichtbaren Spektralbereich
- 2: Kamera für den nicht sichtbaren Spektralbereich
- 3: Auswerteeinheit
- 4: Einrichtung zum Ausgeben einer Warnung

## Patentansprüche

1. Verfahren zum systemimplementierten Erkennen eines Verkehrsteilnehmers und zum Erzeugen einer Warnung für einen Fahrer.
wobei das Verfahren in einem Kraftfahrzeug eingesetzt wird,
wobei bei dem Verfahren
- ein Bild im sichtbaren Spektralbereich und ein Bild im nicht sichtbaren Spektralbereich eines Bereichs vor dem Kraftfahrzeug aufgenommen werden,
- die aufgenommenen Bilder auf Verkehrsteilnehmer untersucht werden und
- eine Warnung nur dann ausgegeben wird, wenn im Bild des nicht sichtbaren Spektralbereichs ein Verkehrsteilnehmer erkannt wird und im Bild des sichtbaren Spektralbereichs dieser Verkehrsteilnehmer nicht erkannt wird,
**dadurch gekennzeichnet, dass** der Verkehrsteilnehmer ein Fußgänger ist,
wobei die Beinbewegung des Fußgängers untersucht wird und nur dann eine Warnung ausgegeben wird, wenn die Beinbewegung eine Querbewegung zeigt,
wobei die Querbewegung des Fußgängers an einer offenen Beinstellung erkannt wird, wobei zuerst das Bild im nicht sichtbaren Spektralbereich untersucht wird, wobei, nur wenn in dem Bild des nicht sichtbaren Spektralbereichs der Verkehrsteilnehmer erkannt wird, das Bild im sichtbaren Spektralbereich in dem Bereich, in welchem im Bild des nicht sichtbaren Spektralbereichs der Verkehrsteilnehmer erkannt worden ist, untersucht wird.

2. Verfahren nach Anspruch 1,
**dadurch gekennzeichnet,**
**dass** das Bild im nicht sichtbaren Spektralbereich ein Wärmebild ist.

3. Verfahren nach Anspruch 2,
**dadurch gekennzeichnet,**
**dass** das Wärmebild mittels einer Fern-Infrarot-Kamera (2) aufgenommen wird.

4. Erkennungs- und Warnsystem für ein Fahrerassistenzsystem eines Kraftfahrzeugs,
mit einer ersten Kamera (1) zur Aufnahme eines Bildes im sichtbare Spektralbereich eines Bereichs vor dem Kraftfahrzeug und einer zweiten Kamera (2) zur Aufnahme eines Bildes im nicht sichtbaren Spektralbereich eines Bereichs vor dem Kraftfahrzeug, und mit
einer Auswerteeinheit (3), der die von den Kameras (1, 2) aufgenommenen Bilder zuführbar sind, wobei mit der Auswerteeinheit (3) die Bilder der Kameras (1, 2) auf Verkehrsteilnehmer untersuchbar sind und wobei die Auswerteeinheit (3) so ausgebildet ist, dass nur dann eine Warnung ausgegeben wird, wenn im Bild des nicht sichtbaren Spektralbereichs ein Verkehrsteilnehmer erkannt wird und im Bild des sichtbaren Spektralbereichs dieser Verkehrsteilnehmer nicht erkannt wird,
**dadurch gekennzeichnet, dass** der Verkehrsteilnehmer ein Fußgänger ist,
dass mit der Auswerteeinheit (3) die Beinbewegung des Fußgängers untersuchbar ist und nur dann eine Warnung ausgegeben wird, wenn die Beinbewegung eine Querbewegung zeigt,
dass mit der Auswerteeinheit (3) eine offene Beinstellung des Fußgängers erkennbar ist, dass zuerst das Bild im nicht sichtbaren Spektralbereich untersucht wird, dass, nur wenn in dem Bild des nicht sichtbaren Spektralbereichs der Verkehrsteilnehmer erkannt wird, das Bild im sichtbaren Spektralbereich in dem Bereich, in welchem im Bild des nicht sichtbaren Spektralbereichs der Verkehrsteilnehmer erkannt worden ist, untersucht wird,

5. System nach Anspruch 4,
**dadurch gekennzeichnet,**
**dass** die zweite Kamera (2) eine Wärmebildkamera ist.

6. System nach Anspruch 5,
**dadurch gekennzeichnet,**
**dass** die Wärmebildkamera eine Fern-Infrarot-Kamera (2) ist.

7. Fahrerassistenzsystem für ein Kraftfahrzeug, umfassend ein Erkennungs- und Warnsystem nach einem der Ansprüche 4 bis 6.

## Claims

1. Method for the system-implemented recognition of a road user and for generating a warning for a driver, wherein the method is used in a motor vehicle,
wherein in the method
- an image of an area in front of the motor vehicle is recorded in the visible spectral region and an image of an area in front of the motor vehicle is recorded in the invisible spectral region,
- the recorded images are examined for road users, and
- a warning is output only if a road user is recognized in the image of the invisible spectral region, and this road user is not recognized in the image of the visible spectral region,
**characterized in that** the road user is a pedestrian,
wherein the movement of the pedestrian's legs is examined and a warning is output only if the movement of the legs indicates a lateral movement,
wherein the lateral movement of the pedestrian is recognized from an open position of the legs,
wherein the image is firstly examined in the invisible spectral region, wherein only if the road user is recognized in the image of the invisible spectral region is the image examined in the visible spectral region in the area in which the road user has been recognized in the image of the invisible spectral region.

2. Method according to Claim 1,
**characterized**
**in that** the image in the invisible spectral region is a thermal image.

3. Method according to Claim 2,
**characterized**
**in that** the thermal image is recorded by means of a long-distance infrared camera (2).

4. Recognition and warning system of a driver assistance system of a motor vehicle, having a first camera (1) for recording an image in the visible spectral region of an area in front of the motor vehicle and a second camera (2) for recording an image in the invisible spectral region of an area in front of the motor vehicle, and having an evaluation unit (3) to which the images which are recorded by the cameras (1, 2) can be fed, wherein the images of the cameras (1, 2) can be examined for road users with the evaluation unit (3), and wherein the evaluation unit (3) is embodied in such a way that a warning is issued only if a road user is recognized in the image of the invisible spectral region and this road user is not recognized in the image of the visible spectral region, **characterized in that** the road user is a pedestrian,
**in that** the movement of the pedestrian's legs can be examined with the evaluation unit (3), and a warning is issued only if the movement of the legs indicates a lateral movement,
**in that** an open position of the pedestrian's legs can be recognized with the evaluation unit (3), **in that** the image is first examined in the invisible spectral region, **in that** only if the road user is recognized in the image of the invisible spectral region is the image examined in the visible spectral region in the area in which the road user has been recognized in the image of the invisible spectral region.

5. System according to Claim 4,
**characterized**
**in that** the second camera (2) is a thermal image camera.

6. System according to Claim 5,
**characterized**
**in that** the thermal image camera is a long-distance infrared camera (2).

7. Driver assistance system for a motor vehicle, comprising a recognition and warning system according to one of Claims 4 to 6.

## Revendications

1. Procédé, implémenté dans un système, pour la détection d'un usager de la route et pour la formation d'un avertissement destiné à un conducteur,
le procédé étant utilisé dans un véhicule automobile,
le procédé comportant les étapes qui consistent à :
saisir dans la plage spectrale visible et dans la plage spectrale invisible une zone située en avant du véhicule automobile,
chercher des usagers de la route dans les images saisies et
délivrer un avertissement uniquement si un usager de la route est détecté dans l'image de la plage spectrale invisible et si cet usager de la route n'est pas détecté dans l'image de la plage spectrale visible, **caractérisé en ce que**
l'usager de la route est un piéton,
**en ce que** le mouvement des jambes du piéton est étudié et un avertissement est délivré uniquement si le mouvement des jambes indique un déplacement transversal,
**en ce que** le déplacement transversal du piéton est détecté par une position ouverte des jambes,
**en ce que** l'image dans la plage spectrale invisible est étudiée en premier et
**en ce que** l'image dans la plage spectrale visible n'est étudiée dans la zone dans laquelle l'usager de la route a été détecté dans l'image dans la plage spectrale invisible que si l'usager de la route a été détecté dans l'image dans la plage spectrale invisible.

2. Procédé selon la revendication 1, **caractérisé en ce que** l'image dans la plage spectrale invisible est une image thermique.

3. Procédé selon la revendication 2, **caractérisé en ce que** l'image thermique est saisie à l'aide d'une caméra (2) travaillant dans l'infrarouge lointain.

4. Système de détection et d'avertissement pour un système d'assistance au conducteur d'une voiture automobile,
le système présentant :
une première caméra (1) qui saisit dans la plage spectrale visible une image d'une zone située en avant du véhicule automobile et une deuxième caméra (2) qui saisit dans la plage spectrale invisible une image d'une zone située en avant du véhicule automobile et
une unité d'évaluation (3) à laquelle les images saisies par les caméras (1, 2) peuvent être apportées,
des usagers de la route pouvant être recherchés par l'unité d'évaluation (3) dans les images saisies par les caméras (1, 2),
l'unité d'évaluation (3) étant configurée de telle sorte qu'un avertissement est délivré uniquement si un usager de la route est détecté dans l'image de la plage spectrale invisible et si cet usager de la route n'est pas détecté dans l'image de la plage spectrale visible, **caractérisé en ce que**
l'usager de la route est un piéton,
**en ce que** le mouvement des jambes du piéton peut être étudié par l'unité d'évaluation (3) et un avertissement est délivré uniquement si le mouvement des jambes indique un déplacement transversal,
**en ce que** le déplacement transversal du piéton peut être détecté par l'unité d'évaluation (3) par une position ouverte des jambes,
**en ce que** l'image dans la plage spectrale invisible est étudiée en premier et
**en ce que** l'image dans la plage spectrale visible n'est étudiée dans la zone dans laquelle l'usager de la route a été détecté dans l'image dans la plage spectrale invisible que si l'usager de la route a été détecté dans l'image dans la plage spectrale invisible.

5. Système selon la revendication 4, **caractérisé en ce que** la deuxième caméra (2) est une caméra qui saisit des images thermiques.

6. Système selon la revendication 5, **caractérisé en ce que** la caméra qui saisit des images thermiques est une caméra (2) qui travaille dans l'infrarouge lointain.

7. Système d'assistance au conducteur d'un véhicule automobile comprenant un système de détection et d'avertissement selon l'une des revendications 4 à 6.
